# EUROPEAN PATENT SPECIFICATION

(11) **EP 3 243 795 B1**
(45) Date of publication and mention of the grant of the patent: **11.11.2020**
(21) Application number: 15876715.2
(22) Date of filing: 30.12.2015
(51) Int. Cl.: C01B 3/02, C01B 3/00, C07D 209/86, F17C 11/00

(54) **LIQUID HYDROGEN STORAGE SYSTEM**
FLÜSSIGSTICKSTOFFSPEICHERSYSTEM
SYSTÈME DE STOCKAGE D'HYDROGÈNE LIQUIDE

(30) Priority: 06.01.2015 CN 201510005811
(43) Date of publication of application: 15.11.2017
(73) Proprietor: Jiangsu Qingyang Energy Co., Ltd., Zhangjiagang City, Jiangsu 215637 (CN)
(72) Inventor: CHENG, Hansong, Suzhou Jiangsu 215637 (CN); WU, Jinping, Wuhan Hubei 430074 (CN); DONG, Yuan, Wuhan Hubei 430074 (CN); YANG, Ming, Wuhan Hubei 430074 (CN)
(74) Representative: Müller-Boré & Partner Patentanwälte PartG mbB
(86) International application number: PCT/CN2015/099863
(87) International publication number: WO 2016/110215

(56) References cited:
- EP-A1- 2 648 314
- CN-A- 102 800 877
- CN-A- 104 555 914
- US-A1- 2014 080 026
- MING YANG ET AL: "Hydrogenation of N-propylcarbazole over supported ruthenium as a new prototype of liquid organic hydrogen carriers (LOHC)", RSC ADVANCES, vol. 3, no. 47, 1 January 2013 (2013-01-01), page 24877, XP055437910, DOI: 10.1039/c3ra44760j
- JIANG ZHAO ET AL: "Current situation and prospect of hydrogen storage technology with new organic liquid", INTERNATIONAL JOURNAL OF HYDROGEN ENERGY, ELSEVIER SCIENCE PUBLISHERS B.V., BARKING, GB, vol. 39, no. 30, 1 March 2014 (2014-03-01) , pages 17442-17451, XP029066299, ISSN: 0360-3199, DOI: 10.1016/J.IJHYDENE.2014.01.199
- SOTOODEH F ET AL: "Kinetics of H"2 recovery from dodecahydro-N-ethylcarbazole over a supported Pd catalyst", APPLIED CATALYSIS A: GENERAL, ELSEVIER, AMSTERDAM, NL, vol. 362, no. 1-2, 30 June 2009 (2009-06-30), pages 155-162, XP026160372, ISSN: 0926-860X, DOI: 10.1016/J.APCATA.2009.04.039 [retrieved on 2009-05-03]
- KARSTEN MÜLLER ET AL: "Thermodynamic Evaluation of Potential Organic Hydrogen Carriers", ENERGY TECHNOLOGY, vol. 1, no. 1, 1 January 2013 (2013-01-01) , pages 20-24, XP055437911, DE ISSN: 2194-4288, DOI: 10.1002/ente.201200045
- JIANG, ZHAO ET AL.: 'Current situation and prospect for hydrogen storage technology with new organic liquid' CHEMICAL INDUSTRY AND ENGINEERING PROGRESS vol. 39, no. 30, 31 December 2012, pages 17442 - 17451, XP029066299

## Description

The present disclosure relates to the technical field of hydrogen storage, and more particularly, to a hydrogen storage material in liquid form.

As a green energy with rich reserves, extensive sources and a high energy density, hydrogen presents a very good application prospect in fuel cells and replaced fossil fuels. In an actual application process, it is important to store and transport the hydrogen. It is more important to find a hydrogen storage method which is efficient and low-cost and can be utilized in large scale.

At present, hydrogen storage methods approximately may be divided into two types, i.e. a physical method and a chemical method. Typically, the physical method includes a low-temperature liquid hydrogen storage method and a high-pressure gaseous hydrogen storage method. The low-temperature liquid hydrogen storage method has a relatively high volume energy density, but an evaporation loss in the storage is inevitable, because a critical temperature of the hydrogen is relatively low and liquefy the hydrogen needs to consume a great deal of cooling energy, and thus, the storage cost is relatively high. Though the high-pressure gaseous hydrogen storage method is used conveniently, it has the relatively low energy density and the potential safety hazards.

In recent years, a hydrogen storage technology attracts attentions of many researchers, cause of a chemical reaction method has the advantages of large hydrogen storage capacity, high energy density and convenient transportation. An ideal hydrogen storage material should have a relatively good reversible hydrogenation/dehydrogenation performance. However, the existing hydrogen storage material based on the chemical reaction method generally has the following disadvantage: a freezing point (melting point) of the hydrogen storage material is overhigh, making it in a solid state around the room temperature. As a result, though the hydrogen storage material is in a liquid state after hydrogenation, in a dehydrogenation process, the hydrogen storage material recovered after being preferentially dehydrogenated is easily coagulated into a solid. And these coagula are covered on a surface of a dehydrogenation catalyst easily, which lead a dehydrogenation reaction interrupted.

In light of the above reasons, it is necessary to provide a hydrogen storage material which is in the liquid state under the room temperature, so as to solve the problem of difficult dehydrogenation caused by the solid hydrogen storage material.

The present disclosure is intended to provide a hydrogen storage material in liquid form, so as to solve the problem of difficult dehydrogenation caused by an overhigh melting point of the hydrogen storage material in the conventional art.

To this end, according to one aspect of the present disclosure, a hydrogen storage material in liquid form is provided, which includes at least two different hydrogen storage components, each of the hydrogen storage components is selected from an unsaturated aromatic hydrocarbon or a heterocyclic unsaturated compound, and at least one of the hydrogen storage component is a low-melting-point compound whose melting point is lower than 80 DEG C; the hydrogen storage material further includes a dehydrogenation additive; and the dehydrogenation additive is selected from one or more of petroleum ether and phenyl ether.

Further, preferably, each of the hydrogen storage components is selected from the heterocyclic unsaturated compound; and a heteroatom in the heterocyclic unsaturated compound are one or more of N, S, O and P.

Further, preferably, a total number of a heterocyclic ring and an aromatic ring in the heterocyclic unsaturated compound is 1-20, and a total number of the heteroatom is 1-20.

Further, relative to a total mass of the hydrogen storage material in liquid form, a mass fraction of the low-melting-point compound is preferably 5-95%.

Further, the hydrogen storage material in liquid form preferably further includes a hydrogenation additive; and the hydrogenation additive is a polar solvent and/or a nonpolar solvent.

Further, relative to every gram of the hydrogen storage component, an added amount of the hydrogenation additive is preferably 0.1-10ml.

Further, preferably, different hydrogen storage components are selected from the group composed of benzene, methylbenzene, ethylbenzene, o-xylene, p-xylene, styrene, phenylacetylene, anthracene, naphthalene, fluorene, aniline, carbazole, N-methylcarbazole, N-ethylcarbazole, N-propylcarbazole, N-isopropylcarbazole, N-butylcarbazole, indole, N-methylindole, N-ethylindole, N-propylindole, quinoline, isoquinoline, pyridine, pyrrole, furan, benzofuran, thiophene, pyrimidine and imidazole.

Further, the polar solvent is preferably selected from one or more of ethanol, methanol, ethyl ether, methyl ether, acetonitrile, ethyl acetate, formamide, isopropanol, n-butanol, dioxane, n-butyl ether, isopropyl ether, dichloromethane, chloroform and dichloroethane.

Further, the nonpolar solvent is preferably selected from one or more of n-hexane, n-pentane, cyclohexane, mesitylene, carbon disulfide, petroleum ether and carbon tetrachloride.

Further, relative to every gram of the hydrogen storage component, an added amount of the dehydrogenation additive is preferably 0.1-10ml.

The hydrogen storage material in liquid form is provided by the present disclosure. It is a multicomponent mixed liquid unsaturated aromatic hydrocarbons and/or heterocyclic hydrocarbons hydrogen storage material. The hydrogen storage material in liquid form includes at least two different hydrogen storage components, each of the hydrogen storage components is selected from the unsaturated aromatic hydrocarbon or the heterocyclic unsaturated compound, and at least one of the hydrogen storage components has a melting point lower than 80 DEG C. Different unsaturated aromatic hydrocarbons or heterocyclic unsaturated compounds have different melting points. After two or more viscous heterocyclic unsaturated compounds are mixed, the formed mixed material has a eutectic point that is at least lower than the melting point of a certain component. By selecting at least one low-melting-point compound whose melting point is lower than 80 DEG C from the two or more unsaturated aromatic hydrocarbons or heterocyclic unsaturated compounds, the eutectic point of the whole hydrogen storage material can be decreased to around the room temperature. And in this way, the hydrogen storage material which is in a liquid state around the room temperature can be obtained. According to the hydrogen storage material provided by the present disclosure, after hydrogenation and in a dehydrogenation process, the recovered hydrogen storage material, which preferentially take place a dehydrogenation reaction cause of contacting to a hydrogenation catalyst, is still in the liquid state. That is beneficial to preventing solid coagula from covering the dehydrogenation catalyst and improving the problem of the difficult dehydrogenation caused by the solid hydrogen storage material.

The accompanying drawings are described here to provide further understanding of the present disclosure, and form a part of the present disclosure. The schematic embodiments and description of the present disclosure are adopted to explain the present disclosure, and do not form improper limits to the present disclosure. In the drawings:
Fig. 1 depicts under different additives, a change chart of a hydrogen storage capacity of a hydrogen storage material with a time in a reference embodiment 34 of the present disclosure;
Fig. 2 depicts under different additive usages, a change chart of a hydrogen storage capacity of a hydrogen storage material with a time in a reference embodiment 35 of the present disclosure;
Fig. 3 depicts under different additives, a change chart of a hydrogen storage capacity of a hydrogen storage material with a time in a reference embodiment 36 of the present disclosure;
Fig. 4 depicts under different additive types and different additive usages, a change chart of a hydrogen storage capacity of a hydrogen storage material with a time in a reference embodiment 37 of the present disclosure; and
Fig. 5 depicts under different additive types and different additive usages, a change chart of a dehydrogenation capacity of an all-hydrogenated hydrogen storage material with a time in an embodiment 38-41, whereof embodiments 38, 40 and 41 are not in accordance with the present disclosure.

It is to be noted that the embodiments of the present application and the characteristics of the embodiments may be combined with each other if there is no conflict. The present disclosure is described below with reference to the drawings and embodiments in detail.

As described in the background, the existing hydrogen storage material has the problem of difficult dehydrogenation, which is due to an overhigh meting point. To solve this problem, the present disclosure provides a hydrogen storage material in liquid form, comprising at least two different hydrogen storage components, each of the hydrogen storage components is selected from an unsaturated aromatic hydrocarbon or a heterocyclic unsaturated compound, and at least one of the hydrogen storage components is a low-melting-point compound whose melting point is lower than 80 DEG C.

Different unsaturated aromatic hydrocarbons or heterocyclic unsaturated compounds have different melting points. After two or more unsaturated aromatic hydrocarbons and/or heterocyclic unsaturated compounds are mixed, the formed mixed material has a eutectic point that is at least lower than the melting point of a certain component. By selecting at least one low-melting-point compound whose melting point is lower than 80 DEG C from the two or more unsaturated aromatic hydrocarbons and/or heterocyclic unsaturated compounds, the eutectic point of the whole hydrogen storage material can be decreased to around the room temperature. And in this way, the hydrogen storage material which is in a liquid state around the room temperature can be obtained. According to the hydrogen storage material provided by the present disclosure, after hydrogenation and in a dehydrogenation process, the recovered hydrogen storage material, which preferentially take place a dehydrogenation reaction cause of contacting to a hydrogenation catalyst, is still in the liquid state. That is beneficial to preventing solid coagula from covering the dehydrogenation catalyst and improving the problem of the difficult dehydrogenation caused by the solid hydrogen storage material. The melting point of the hydrogen storage material in liquid form provided by the present disclosure may be -50-60 DEG C.

According to the above description of the present disclosure, a person skilled in the art may select specific components in the hydrogen storage material. In a preferred embodiment, each of the hydrogen storage components is selected from the heterocyclic unsaturated compound, and a heteroatom in the heterocyclic unsaturated compound are one or more of N, S, O and P. The heterocyclic unsaturated compound containing one or more heteroatoms has a relatively good reversible hydrogenation/dehydrogenation property. By mixing two different heterocyclic unsaturated compounds, the formed hydrogen storage material has a relatively low eutectic point and the relatively high reversible hydrogenation/dehydrogenation property. More preferably, a total number of a heterocyclic ring and an aromatic ring in the heterocyclic unsaturated compound is 1-20, and a total number of the heteroatom is 1-20. Controlling the total number of the heterocyclic ring and the aromatic ring in the heterocyclic unsaturated compound to be within 1-20, the melting point of each hydrogen storage component in the hydrogen storage material is relatively lower, and the formed hydrogen storage material also correspondingly has the lower eutectic point. Thus, the hydrogen storage material can keep a liquid state in a lower-temperature environment, thereby performing hydrogen storage, transportation and dehydrogenation operations in different regions and seasons conveniently.

According to the above description of the present disclosure, a person skilled in the art may select a proportion of each hydrogen storage component in the hydrogen storage material in liquid form. In a preferred embodiment, relative to a total mass of the hydrogen storage material in liquid form, a mass fraction of the low-melting-point compound is 5-95%. Controlling the proportion of the low-melting-point compound in the above range, it is beneficial to further reducing the melting point of the hydrogen storage material.

As long as comprising at least two hydrogen storage components in the above range, the melting point of the hydrogen storage material can be effectively reduced. It is ensured that the hydrogen storage material can keep in a liquid state, and the hydrogen storage material recovered in a later dehydrogenation process is prevented from being coagulated into a solid state, which may hinder the normal operation of the dehydrogenation. In a preferred embodiment, the hydrogen storage material in liquid form further comprises a hydrogenation additive; and the hydrogenation additive is a polar solvent and/or a nonpolar solvent.

There are relatively high intermolecular acting forces among the hydrogen storage components selected from the unsaturated components or the heterocyclic unsaturated compounds. When the hydrogenation is implemented on the hydrogen storage material, an effective contact between the hydrogen storage components and a surface of a hydrogenation catalyst may be weakened, which is caused of the overhigh intermolecular interacting forces. Thus, a hydrogenation rate of the hydrogen storage material will be reduced. On the other hand, an intermolecular distance among the hydrogen storage components is reduced due to the acting forces, which is possible to prevent hydrogen atoms obtained by surface decomposition of the catalyst from entering. Thus, the hydrogenation rate of the hydrogen storage material will slow down. The polar solvent and/or the nonpolar solvent are/is introduced to the hydrogen storage material in liquid form to take as the hydrogenation additive, so the acting forces among the hydrogen storage components can be reduced, and thus, the hydrogenation rate of the hydrogen storage material in liquid form can be improved.

According to the hydrogen storage material in liquid form provided by the present disclosure, as long as the hydrogenation additive is added, the intermolecular acting forces among the hydrogen storage components can be reduced to some extent, which can improve the hydrogenation capacity and the hydrogenation rate of the hydrogen storage material. In a preferred embodiment, relative to every gram of the hydrogen storage component, an added amount of the hydrogenation additive is 0.1-10ml. Controlling the proportion of the hydrogenation additive in the above range, the intermolecular acting forces among the hydrogen storage components can be weakened, so that the hydrogenation rate of the hydrogen storage material is improved. Meanwhile, the hydrogen storage components can further be effectively dispersed in the whole liquid material. And consequently, the hydrogen storage components can be fully contacted with the surface of the hydrogenation catalyst, further improving the hydrogenation rate and the hydrogenation capacity of the hydrogen storage material.

According to the above description of the present disclosure, a person skilled in the art may select a specific type of each hydrogen storage component. In a preferred embodiment, the different hydrogen storage components are selected from the group composed of benzene, methylbenzene, ethylbenzene, o-xylene, p-xylene, styrene, phenylacetylene, anthracene, naphthalene, fluorene, aniline, carbazole, N-methylcarbazole, N-ethylcarbazole, N-propylcarbazole, N-isopropylcarbazole, N-butylcarbazole, indole, N-methylindole, N-ethylindole, N-propylindole, quinoline, isoquinoline, pyridine, pyrrole, furan, benzofuran, thiophene, pyrimidine and imidazole. The benzene, the methylbenzene, the ethylbenzene, the o-xylene, the p-xylene, the styrene, the phenylacetylene, the anthracene, the naphthalene and the fluorene are the unsaturated aromatic hydrocarbons, while the aniline, the carbazole, the N-methylcarbazole, the N-ethylcarbazole, the N-propylcarbazole, the N-isopropylcarbazole, the N-butylcarbazole, the indole, the N-methylindole, the N-ethylindole, the N-propylindole, the quinoline, the isoquinoline, the pyridine, the pyrrole, the furan, the benzofuran, the thiophene, the pyrimidine and the imidazole are the heterocyclic unsaturated compounds. Any two and more components of the unsaturated aromatic hydrocarbons and the heterocyclic unsaturated compounds above are taken as the hydrogen storage components. These components are easily available and relatively low in cost, and simultaneously have relatively low melting points. Selecting at least two types therein as the hydrogen storage component, the obtained hydrogen storage material has a relatively low eutectic point. Meanwhile, it simultaneously further has a relatively good reversible hydrogenation/dehydrogenation performance.

According to the components provided by the present disclosure, the unsaturated aromatic hydrocarbons, whose melting point is lower than 50 DEG C, include the benzene, the methylbenzene, the ethylbenzene, the o-xylene, the p-xylene, the styrene, the phenylacetylene, and the anthracene. While the heterocyclic unsaturated compounds, whose melting point is lower than 50 DEG C, include the aniline, the N-propylcarbazole, the N-methylindole, the N-ethylindole, the N-propylindole, the quinoline, the isoquinoline, the pyridine, the pyrrole, the furan, the benzofuran, the thiophene and the pyrimidine. According to the hydrogen storage material provided by the present disclosure, more preferably, the low-melting-point compound is selected from the above components whose melting point is lower than 50 DEG C.

In the hydrogen storage material in liquid form provided by the present disclosure, the hydrogenation additive used may be any polar solvent or nonpolar solvent. In a preferred embodiment, the polar solvent includes but not limited to one or more of ethanol, methanol, ethyl ether, methyl ether, acetonitrile, ethyl acetate, formamide, isopropanol, N-butanol, dioxane, n-butyl ether, isopropyl ether, dichloromethane, chloroform and dichloroethane. And the nonpolar solvent includes but not limited to one or more of n-hexane, n-pentane, cyclohexane, mesitylene, carbon disulfide, petroleum ether and carbon tetrachloride. These polar solvents and nonpolar solvents have a relatively good compatibility with the hydrogen storage components. Adopting these polar solvents and nonpolar solvents as the hydrogenation additive of the hydrogen storage material, the intermolecular acting forces among the hydrogen storage components can be more effectively reduced, thus improving the hydrogenation rate of the hydrogen storage material.

After hydrogenation, the hydrogen storage material in liquid form provided by the present disclosure is directly contacted and reacted with a dehydrogenation catalyst in dehydrogenation. The hydrogen storage material in liquid form further includes a dehydrogenation additive; and the dehydrogenation additive is selected from one or more of petroleum ether and phenyl ether. To implement the dehydrogenation on the hydrogenated hydrogen storage material, the dehydrogenation rate of the hydrogen storage material can be improved effectively. In a preferred embodiment, relative to every gram of the hydrogen storage component, an added amount of the dehydrogenation additive is 0.1-10ml.

The present disclosure will be further described below in detail with reference to specific embodiments, and these embodiments should not be understood as limits to a protection scope of the present disclosure.

In Embodiment 1 to 16, which are reference examples, different hydrogen storage materials are prepared, and the eutectic point of each hydrogen storage material is measured.

### Reference Embodiment 1 to 4

Take N-propylcarbazole (whose melting point is 48 DEG C) and N-ethylcarbazole (whose melting point is 70 DEG C) as hydrogen storage components and mix to form a hydrogen storage material. In each embodiment, the proportions of the two components and the eutectic point of the hydrogen storage material are as follows:

| | N-propylcarbazole (wt%) | N-ethylcarbazole (wt%) | Eutectic point of hydrogen storage material (°C) |
|---|---|---|---|
| Embodiment 1 | 40 | 60 | 24 |
| Embodiment 2 | 50 | 50 | 15 |
| Embodiment 3 | 60 | 40 | 13 |
| Embodiment 4 | 70 | 30 | 29 |

### Reference Embodiment 5 to 8

Take N-propylcarbazole (whose melting point is 48 DEG C) and N-methylindol (whose melting point is -29.6 DEG C) as hydrogen storage components and mix to form a hydrogen storage material. in each embodiment, the proportions of the two components and the eutectic point of the hydrogen storage material are as follows:

| | N-propylcarbazole (wt%) | N-methylindol (wt%) | Eutectic point of the hydrogen storage material (°C) |
|---|---|---|---|
| Embodiment 5 | 10 | 90 | -5.2 |
| Embodiment 6 | 30 | 70 | -4.6 |
| Embodiment 7 | 50 | 50 | -4.3 |
| Embodiment 8 | 70 | 30 | -4.2 |

### Reference Embodiment 9 to 12

Take N-propylcarbazole (whose melting point is 48 DEG C), N-ethylcarbazole (whose melting point is 70 DEG C) and N-methylindol (whose melting point is -29.6 DEG C) as hydrogen storage components and mix to form a hydrogen storage material. In each embodiment, the proportions of the three components and the eutectic point of the hydrogen storage material are as follows:

| | N-ethylcarbazole (wt%) | N-propylcarbazole (wt%) | N-methylindol (wt%) | Eutectic point of the hydrogen storage material (°C) |
|---|---|---|---|---|
| Embodiment 9 | 6 | 4 | 90 | -4.1 |
| Embodiment 10 | 12 | 8 | 80 | -4.3 |
| Embodiment 11 | 18 | 12 | 70 | -4.1 |
| Embodiment 12 | 24 | 16 | 60 | -4.1 |

### Reference Embodiment 13 to 16

Take N-propylcarbazole (whose melting point is 48 DEG C), carbazole (whose melting point is 246.3 DEG C) and N-ethylcarbazole (whose melting point is 70 DEG C) as hydrogen storage components and mix to form a hydrogen storage material. In each embodiment, the proportions of the three components and the eutectic point of the hydrogen storage material are as follows:

| | N-ethylcarbazole (wt%) | N-propylcarbazole (wt%) | N-methylindol (wt%) | Eutectic point of the hydrogen storage material (°C) |
|---|---|---|---|---|
| Embodiment 13 | 54 | 36 | 10 | 60.3 |
| Embodiment 14 | 48 | 32 | 20 | 62.4 |
| Embodiment 15 | 42 | 28 | 30 | 64.5 |
| Embodiment 16 | 36 | 24 | 40 | 65.1 |

In Embodiment 17 to 33, which are reference examples, a hydrogenation test is implemented by adopting the hydrogen storage material.

### Reference Embodiment 17 to 22

Take 12g of N-propylcarbazole (whose melting point is 48 DEG C) and 8g of N-ethylcarbazole (whose melting point is 70 DEG C) as hydrogen storage components, and take cyclohexane as a hydrogenation additive, and mix to form a hydrogen storage material. Implement hydrogenation reaction under a pressure of 8MPa, a stirring speed of 600rpm and a catalytic action of 2g of a hydrogenation catalyst Ru-Al₂O₃. Usages of the hydrogenation additive, hydrogenation temperatures, and contents of all-hydrogenated products at different hydrogenation times are as follows:

| | Usage of cyclohexane (ml) | Hydrogenation temperature (°C) | Hydrogen storage capacity of the hydrogen storage material at different hydrogenation times (wt%) | | | | |
|---|---|---|---|---|---|---|---|
| | | | 0.5h | 1h | 1.5h | 2h | 2h |
| Embodiment 17 | 0 | 240 | 0 | 0 | 0 | 0 | 2.55 |
| Embodiment 18 | 10 | 150 | -- | -- | -- | 3.43 | 3.51 |
| Embodiment 19 | 20 | 150 | 5.52 | 5.54 | 5.57 | 5.57 | 5.57 |
| Embodiment 20 | 30 | 150 | 5.13 | 5.42 | 5.46 | 5.48 | -- |
| Embodiment 21 | 40 | 150 | 5.31 | 5.38 | 5.42 | 5.48 | -- |
| Embodiment 22 | 50 | 150 | 4.83 | 5.38 | 5.42 | 5.55 | -- |

In the present disclosure, a definition of the "hydrogen storage capacity of the hydrogen storage material" is a weight percentage relative to a total mass of the original hydrogen storage material.

### Reference Embodiment 23

Take 12g of N-propylcarbazole (whose melting point is 48 DEG C) and 8g of N-ethylcarbazole (whose melting point is 70 DEG C) as hydrogen storage components, and take 20ml of ethanol as a hydrogenation additive, and mix to form a hydrogen storage material. Implement hydrogenation reaction under a temperature being 150 DEG C, a pressure of 8MPa, a stirring speed of 600rpm and a catalytic action of 2g of a hydrogenation catalyst Ru-Al₂O₃. Changes in a hydrogen storage capacity at different hydrogenation times are as follows:

| | 4h (wt%) | 6h (wt%) |
|---|---|---|
| Embodiment 23 | 3.91 | 5.57 |

### Reference Embodiment 24 to 26

Take 2.5g of N-propylcarbazole (whose melting point is 48 DEG C) and 2.5g of N-methylindol (whose melting point is -29.6 DEG C) as hydrogen storage components, and optionally mix with a hydrogenation additive to form a hydrogen storage material. Implement hydrogenation reaction under a temperature of 140 DEG C, a pressure of 7MPa, and a catalytic action of 0.5g of a hydrogenation catalyst Ru-Al₂O₃, wherein a treatment time is 5h. Types and usages of the hydrogenation additives adopted in the hydrogen storage material, and contents of products at different hydrogenation degrees after 5h are as follows:

| | Hydrogenation additive and usage | Hydrogen storage capacity after 5h treatment |
|---|---|---|
| | | (wt%) |
| Embodiment 24 | 0 | 0.88 |
| Embodiment 25 | 30ml of cyclohexane | 4.18 |
| Embodiment 26 | 30ml of n-hexane | 4.42 |

### Reference Embodiment 27 and 28

Take 3g of N-propylcarbazole (whose melting point is 48 DEG C), 2g of N-ethylcarbazole (whose melting point is 70 DEG C) and 5g of N-methylindol (whose melting point is -29.6 DEG C) as hydrogen storage components, and optionally mix with a hydrogenation additive n-hexane to form a hydrogen storage material. Implement hydrogenation reaction under a temperature of 140 DEG C, a pressure of 6MPa, and a catalytic action of 1g of a hydrogenation catalyst Ru-Al₂O₃. The usages of the hydrogenation additive n-hexane adopted in the hydrogen storage material and hydrogen storage capacities after different treatment times are as follows:

| | Usage of n-hexane (ml) | Contents of products at different hydrogenation degrees under different hydrogenation times (wt%) | |
|---|---|---|---|
| | | Hydrogenation time | |
| Embodiment 27 | 0 | 3h | 0.60 |
| | | 6h | 2.76 |
| Embodiment 28 | 40ml | Hydrogenation time | |
| | | 3h | 5.07 |
| | | 6h | 5.50 |

### Reference Embodiment 29 to 33

Take 6g of N-propylcarbazole (whose melting point is 48 DEG C), 4g of N-ethylcarbazole (whose melting point is 70 DEG C) and 10g of carbazole (whose melting point is 246.3 DEG C) as the hydrogen storage components, and optionally mix with a hydrogenation additive cyclohexane to form a hydrogen storage material. Implement hydrogenation reaction under a temperature of 150 DEG C, a pressure of 7MPa, and a catalytic action of 2g of a hydrogenation catalyst Ru-Al₂O₃. The hydrogenation additive of embodiment 29, 30 and 31 is cyclohexane, and the hydrogenation additive of embodiment 32 and 33 is n-hexane. The usages of the hydrogenation additive adopted in the hydrogen storage material and contents of products at different hydrogenation degrees after different treatment times are as follows:

| | Usage of additive | Hydrogen storage capacities under different hydrogenation times (wt%) | |
|---|---|---|---|
| | | Hydrogenation time | |
| Embodiment 29 | 0 | 2h | 0.32 |
| | | 4h | 0.56 |
| Embodiment 30 | 10ml | Hydrogenation time | |
| | | 2h | 0.78 |
| | | 4h | 1.64 |
| Embodiment 31 | 30ml | Hydrogenation time | |
| | | 2h | 1.78 |
| | | 4h | 4.2 |
| Embodiment 32 | 10ml | Hydrogenation time | |
| | | 2h | 0.97 |
| | | 4h | 2.13 |
| Embodiment 33 | 30ml | Hydrogenation time | |
| | | 2h | 2.89 |
| | | 4h | 5.32 |

### Embodiment 34 as reference example

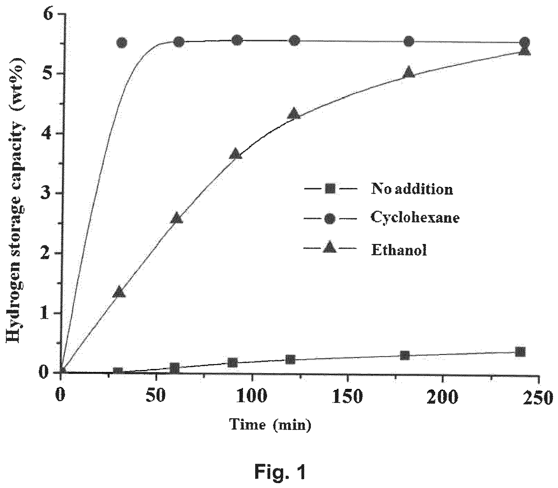

In the embodiment, respectively add 20ml of different hydrogenation additives to a binary material of N-propylcarbazole and N-ethylcarbazole (mass ratio is 6: 4, 20g in total). Implement hydrogenation reaction under 150 DEG C, 8MPa and a catalytic action of Ru-Al₂O₃. Under the different additives, a change of a hydrogen storage capacity of a hydrogen storage material with a time is as shown in Fig. 1.

### Embodiment 35 as reference example

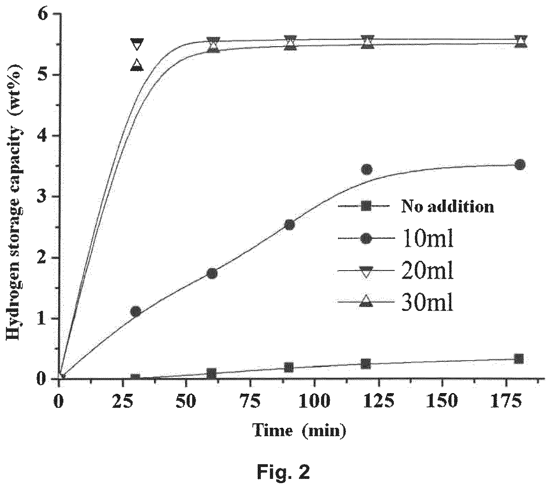

In the embodiment, respectively add different usages of a hydrogenation additive to a binary material of N-propylcarbazole and N-ethylcarbazole (mass ratio is 6: 4, 20g in total). Implement hydrogenation reaction under 150 DEG C, 8MPa and a catalytic action of Ru-Al₂O₃. Under the different usages of the additive, a change of a hydrogen storage capacity of a hydrogen storage material with a time is as shown in Fig. 2.

### Embodiment 36 as reference example

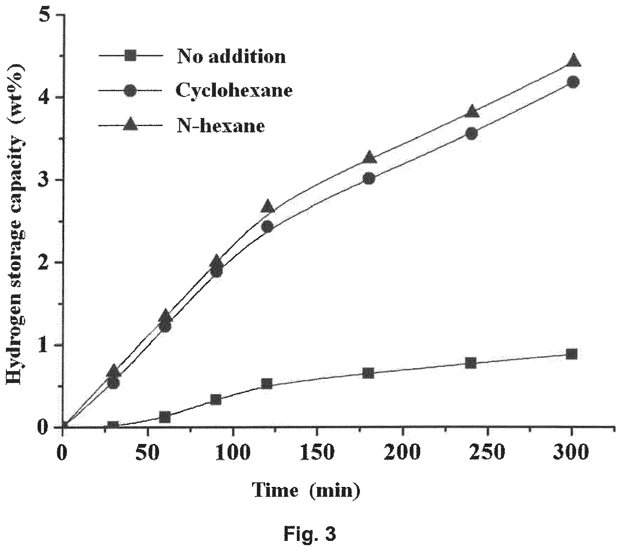

In the embodiment, respectively add 30ml of hydrogenation additives to a binary material of N-propylcarbazole and N-ethylcarbazole (mass ratio is 5: 5, 5g in total). Implement hydrogenation reaction under 140 DEG C, 7MPa and a catalytic action of Ru-Al₂O₃. Under the different additives, a change of a hydrogen storage capacity of a hydrogen storage material with a time is as shown in Fig. 3.

### Embodiment 37 as reference example

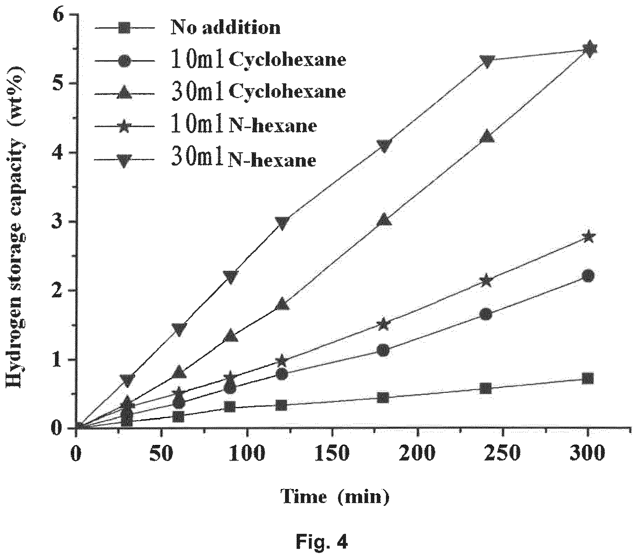

In the embodiment, respectively add different usages and different types of hydrogenation additives to a ternary material of N-propylcarbazole, N-ethylcarbazole and carbazole (mass ratio is 3: 2: 5, 20g in total). Implement hydrogenation reaction under 150 DEG C, 7MPa and a catalytic action of Ru-Al₂O₃. Under the different types of the additives and the different usages of the additives, a change of a hydrogen storage capacity of a hydrogen storage material with a time is as shown in Fig. 4.

In Embodiment 38 to 41, a dehydrogenation test is implemented on all-hydrogenated products in different hydrogen storage materials. Embodiments 38, 40 and 41 are not in accordance with the present disclosure.

Embodiment 38 to 41, whereof embodiments 38, 40 and 41 are not in accordance with the present disclosure.

After implementing the hydrogenation reaction on the hydrogen storage material provided in the embodiment 19, implement dehydrogenation on the obtained all-hydrogenated products. Dehydrogenation conditions are as follows: the dehydrogenation treatment is implemented on 3g of the all-hydrogenated products, a dehydrogenation temperature is 170 DEG C, a pressure is 1.01 × 10⁵ Pa, a stirring speed is 200rpm, and 0.6g of a dehydrogenation catalyst Pd-Al₂O₃ and an optional dehydrogenation additive are adopted. The types and the usages of the dehydrogenation additives adopted in different embodiments are as follows:

| | Dehydrogenation additive | Usage of the dehydrogenation additive |
|---|---|---|
| Embodiment 38 | -- | 0 |
| Embodiment 39 | Petroleum ether | 10ml |
| Embodiment 40 | Decahydronaphthalene | 10ml |
| Embodiment 41 | Mesitylene | 10ml |

Characterize dehydrogenation effects of the all-hydrogenated products in the embodiment 38 to 41, and a characterization method is GC-MS detection. (Model: Agilent GC-MSD 7890/5795) Implement online analysis on all levels of intermediate products in hydrogenation/dehydrogenation reaction.

Relevant parameters when an instrument is used are as shown in a table below:

| Temperature of a sample injection port | 300 DEG C | Sample injection volume | 1 µL |
|---|---|---|---|
| Carrier gas flow | 1.5ml/min | Solvent delay | 3min |
| Carrier gas | He gas | Split ratio | 100: 1 |
| Model of chromatographic column | BD-17ms 320 DEG C: 30m^{∗}320 µm^{∗}0.25 µm | | |

During detection, a column box program is set as follows:

| | Heating rate (°C/min) | Temperature (°C) | Retention time (min) | Runtime (min) |
|---|---|---|---|---|
| Initial | / | 130 | 0 | 0 |
| Stage 2 | 10 | 240 | 3 | 13 |

| | Additive and usage (ml) | Dehydrogenation temperature (°C) | Dehydrogenation capacity of a hydrogen storage material at different hydrogenation times (wt%) | | | | |
|---|---|---|---|---|---|---|---|
| | | | 1h | 2h | 3h | 4h | 5h |
| Embodiment 38 | 0 | 170 | 1.54 | 1.98 | 2.30 | 2.66 | 2.95 |
| Embodiment 39 | Petroleum ether 10ml | 170 | 3.94 | 4.41 | 4.73 | 5.07 | 5.27 |
| Embodiment 40 | Decahydronaphthalene 10ml | 170 | 2.77 | 3.54 | 3.86 | 4.05 | 4.22 |
| Embodiment 41 | Mesitylene 10ml | 170 | 2.36 | 3.23 | 3.70 | 3.98 | 4.20 |

In the present disclosure, a definition of the "dehydrogenation capacity" is a weight percentage relative to a total mass of the original hydrogen storage material.

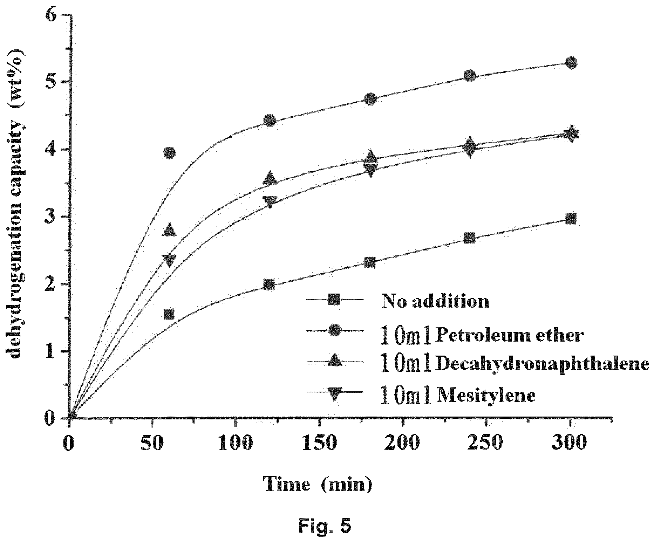

In the embodiment 38 to 41, under different types of the additives and different usages of the additives, a change of a dehydrogenation capacity of an all-hydrogenated hydrogen storage material with a time is as shown in Fig. 5.

It may be observed from the above data that the embodiments of the present disclosure achieve the following technical effects:
According to experimental data of the reference embodiment 1 to 16, the hydrogen storage material has a relatively low melting point and still can keep in a liquid state around the room temperature. From the data in the embodiment 17 to 41, it can be seen that the hydrogen storage material in liquid form provided by the disclosure has relatively high hydrogenation/dehydrogenation rate and a reversible hydrogenation/dehydrogenation performance in a hydrogenation/dehydrogenation test. And in addition, the hydrogenation and dehydrogenation operations are relatively simple, thus being beneficial to further reducing the hydrogen storage cost.

## Claims

1. A hydrogen storage material in liquid form, the hydrogen storage material in liquid form comprises at least two different hydrogen storage components, each of the hydrogen storage components is selected from an unsaturated aromatic hydrocarbon or a heterocyclic unsaturated compound, and at least one of the hydrogen storage components is a low-melting-point compound whose melting point is lower than 80 DEG C; the hydrogen storage material further comprises a dehydrogenation additive; and the dehydrogenation additive is selected from one or more of petroleum ether and phenyl ether.

2. The hydrogen storage material in liquid form as claimed in claim 1, wherein each of the hydrogen storage components is selected from the heterocyclic unsaturated compound; and a heteroatom in the heterocyclic unsaturated compound is one or more of N, S, O and P.

3. The hydrogen storage material in liquid form as claimed in claim 2, wherein a total number of a heterocyclic ring and an aromatic ring in the heterocyclic unsaturated compound is 1-20, and a total number of the heteroatom is 1-20.

4. The hydrogen storage material in liquid form as claimed in any one of claims 1-3, wherein relative to a total mass of the hydrogen storage material in liquid form, a mass fraction of the low-melting-point compound is 5-95%.

5. The hydrogen storage material in liquid form as claimed in any one of claims 1-3, wherein the hydrogen storage material in liquid form further comprises a hydrogenation additive; and the hydrogenation additive is a polar solvent and/or a nonpolar solvent.

6. The hydrogen storage material in liquid form as claimed in claim 5, wherein relative to every gram of the hydrogen storage component, an added amount of the hydrogenation additive is 0.1-10ml.

7. The hydrogen storage material in liquid form as claimed in claim 1, wherein the different hydrogen storage components are selected from the group composed of benzene, methylbenzene, ethylbenzene, o-xylene, p-xylene, styrene, phenylacetylene, anthracene, naphthalene, fluorene, aniline, carbazole, N-methylcarbazole, N-ethylcarbazole, N-propylcarbazole, N-isopropylcarbazole, N-butylcarbazole, indole, N-methylindole, N-ethylindole, N-propylindole, quinoline, isoquinoline, pyridine, pyrrole, furan, benzofuran, thiophene, pyrimidine and imidazole.

8. The hydrogen storage material in liquid form as claimed in claim 5, wherein the polar solvent is selected from one or more of ethanol, methanol, ethyl ether, methyl ether, acetonitrile, ethyl acetate, formamide, isopropanol, n-butanol, dioxane, n-butyl ether, isopropyl ether, dichloromethane, chloroform and dichloroethane.

9. The hydrogen storage material in liquid form as claimed in claim 5, wherein the nonpolar solvent is selected from one or more of n-hexane, n-pentane, cyclohexane, mesitylene, carbon disulfide, petroleum ether and carbon tetrachloride.

10. The hydrogen storage material in liquid form as claimed in any one of claims 1 to 9, wherein relative to every gram of the hydrogen storage component, an added amount of the dehydrogenation additive is 0.1-10ml.

## Patentansprüche

1. Wasserstoffspeichermaterial in flüssiger Form, wobei das Wasserstoffspeichermaterial in flüssiger Form mindestens zwei verschiedene Wasserstoffspeicherkomponenten umfasst, wobei jede der Wasserstoffspeicherkomponenten aus einem ungesättigten aromatischen Kohlenwasserstoff oder einer heterocyclischen ungesättigten Verbindung ausgewählt ist und mindestens eine der Wasserstoffspeicherkomponenten eine Verbindungen mit niedrigem Schmelzpunkt ist, deren Schmelzpunkt niedriger als 80°C ist; wobei das Wasserstoffspeichermaterial ferner ein Dehydrierungsadditiv umfasst; und wobei das Dehydrierungsadditiv aus einem oder mehreren von Petrolether und Phenylether ausgewählt ist.

2. Wasserstoffspeichermaterial in flüssiger Form nach Anspruch 1, wobei jede der Wasserstoffspeicherkomponenten aus der heterocyclischen ungesättigten Verbindung ausgewählt ist; und ein Heteroatom in der heterocyclischen ungesättigten Verbindung eines oder mehrere von N, S, O und P ist.

3. Wasserstoffspeichermaterial in flüssiger Form nach Anspruch 2, wobei eine Gesamtzahl eines heterocyclischen Rings und eines aromatischen Rings in der heterocyclischen ungesättigten Verbindung 1 bis 20 beträgt und eine Gesamtzahl des Heteroatoms 1 bis 20 beträgt.

4. Wasserstoffspeichermaterial in flüssiger Form nach einem der Ansprüche 1 bis 3, wobei bezogen auf eine Gesamtmasse des Wasserstoffspeichermaterials in flüssiger Form ein Massenanteil der Verbindung mit niedrigem Schmelzpunkt 5 bis 95% beträgt.

5. Wasserstoffspeichermaterial in flüssiger Form nach einem der Ansprüche 1 bis 3, wobei das Wasserstoffspeichermaterial in flüssiger Form ferner ein Hydrierungsadditiv umfasst; und das Hydrierungsadditiv ein polares Lösungsmittel und/oder ein unpolares Lösungsmittel ist.

6. Wasserstoffspeichermaterial in flüssiger Form nach Anspruch 5, wobei bezogen auf jedes Gramm der Wasserstoffspeicherkomponente eine zugesetzte Menge des Hydrierungsadditivs 0,1 bis 10 ml beträgt.

7. Wasserstoffspeichermaterial in flüssiger Form nach Anspruch 1, wobei die verschiedenen Wasserstoffspeicherkomponenten aus der Gruppe ausgewäjlt sind, bestehend aus Benzol, Methylbenzol, Ethylbenzol, o-Xylol, p-Xylol, Styrol, Phenylacetylen, Anthracen, Naphthalin, Fluoren, Anilin, Carbazol, N-Methylcarbazol, N-Ethylcarbazol, N-Propylcarbazol, N-Isopropylcarbazol, N-Butylcarbazol, Indol, N-Methylindol, N-Ethylindol, N-Propylindol, Chinolin, Isochinolin, Pyridin, Pyrrol, Isochinolin, Pyridin, Pyrrol, Furan, Benzofuran, Thiophen, Pyrimidin und Imidazol.

8. Wasserstoffspeichermaterial in flüssiger Form nach Anspruch 5, wobei das polare Lösungsmittel aus einem oder mehreren von Ethanol, Methanol, Ethylether, Methylether, Acetonitril, Ethylacetat, Formamid, Isopropanol, n-Butanol, Dioxan, n-Butylether, Isopropylether, Dichlormethan, Chloroform und Dichlorethan ausgewählt ist.

9. Wasserstoffspeichermaterial in flüssiger Form nach Anspruch 5, wobei das unpolare Lösungsmittel aus einem oder mehreren von n-Hexan, n-Pentan, Cyclohexan, Mesitylen, Kohlenstoffdisulfid, Petrolether und Tetrachlorkohlenstoff ausgewählt ist.

10. Wasserstoffspeichermaterial in flüssiger Form nach einem der Ansprüche 1 bis 9, wobei bezogen auf jedes Gramm der Wasserstoffspeicherkomponente eine zugesetzte Menge des Dehydrierungsadditivs 0,1 bis 10 ml beträgt.

## Revendications

1. Matériau de stockage d'hydrogène sous forme liquide, le matériau de stockage d'hydrogène sous forme liquide comprenant au moins deux composants différents de stockage d'hydrogène, chacun des composants de stockage d'hydrogène étant choisi parmi un hydrocarbure aromatique insaturé ou un composé hétérocyclique insaturé, et au moins l'un des composants de stockage d'hydrogène est un composé à faible point de fusion dont le point de fusion est inférieur à 80°C ; le matériau de stockage d'hydrogène comprenant en outre un additif de déshydrogénation; et l'additif de déshydrogénation est choisi parmi un ou plusieurs de l'éther de pétrole et du phényléther.

2. Matériau de stockage d'hydrogène sous forme liquide selon la revendication 1, dans lequel chacun des composants de stockage d'hydrogène est choisi parmi le composé hétérocyclique insaturé; et un hétéroatome du composé hétérocyclique insaturé est un ou plusieurs parmi N, S, O et P.

3. Matériau de stockage d'hydrogène sous forme liquide selon la revendication 2, dans lequel le nombre total de cycle hétérocycle et de cycle aromatique dans le composé hétérocyclique insaturé est 1 à 20, et le nombre total d'hétéroatome est 1 à 20.

4. Matériau de stockage d'hydrogène sous forme liquide selon l'une quelconque des revendications 1 à 3, dans lequel par rapport à la masse totale du matériau de stockage d'hydrogène sous forme liquide, la fraction massique du composé de faible point de fusion se situe dans l'intervalle allant de 5 à 95%.

5. Matériau de stockage d'hydrogène sous forme liquide selon l'une quelconque des revendications 1 à 3, dans lequel le matériau de stockage d'hydrogène sous forme liquide comprend en outre un additif d'hydrogénation; et l'additif d'hydrogénation est un solvant polaire et/ou un solvant non polaire.

6. Matériau de stockage d'hydrogène sous forme liquide selon la revendication 5, dans lequel par rapport à chaque gramme de matériau de stockage d'hydrogène, la quantité ajoutée de l'additif d'hydrogénation se situe dans l'intervalle allant de 0,1 à 10 ml.

7. Matériau de stockage d'hydrogène sous forme liquide selon la revendication 1, dans lequel les différents composants de stockage d'hydrogène sont choisis parmi le groupe composé du benzène, du méthylbenzène, de l'éthylbenzène, de l'o-xylène, du p-xylène, du styrène, du phénylacétylène, de l'anthracène, du naphtalène, du fluorène, de l'aniline, du carbazole, du N-méthylcarbazole, du N-éthylcarbazole, du N-propylcarbazole, du N-isopropylcarbazole, du N-butylcarbazole, de l'indole, du N-méthylindole, du N-éthylindole, du N-propylindole, de la quinoléine, de l'isoquinoléine, de la pyridine, du pyrrole, du furanne, du benzofuranne, du thiophène, de la pyrimidine et de l'imidazole.

8. Matériau de stockage d'hydrogène sous forme liquide selon la revendication 5, dans lequel le solvant polaire est choisi parmi un ou plusieurs de l'éthanol, du méthanol, de l'éthyléther, du méthyléther, de l'acétonitrile, de l'acétate d'éthyle, du formamide, de l'isopropanol, du n-butanol, du dioxanne, du n-butyléther, de l'isopropyléther, du dichlorométhane, du chloroforme et du dichloroéthane.

9. Matériau de stockage d'hydrogène sous forme liquide selon la revendication 5, dans lequel le solvant non polaire est choisi parmi un ou plusieurs du n-hexane, du n-pentane, du cyclohexane, du mésitylène, du disulfure de carbone, de l'éther de pétrole et du tétrachlorure de carbone.

10. Matériau de stockage d'hydrogène sous forme liquide selon l'une quelconque des revendications 1 à 9, dans lequel par rapport à chaque gramme du composant de stockage d'hydrogène, la quantité ajoutée de l'additif de déshydrogénation se situe dans l'intervalle allant de 0,1 à 10 ml.
